(19) Europäisches Patentamt
European Patent Office
Office européen des brevets

(11) Veröffentlichungsnummer : **0 054 138**
**B1**

(12) # EUROPÄISCHE PATENTSCHRIFT

(45) Veröffentlichungstag der Patentschrift : **04.07.84**

(21) Anmeldenummer : **81108697.4**

(22) Anmeldetag : **22.10.81**

(51) Int. Cl.³ : **C 08 F210/02**, C 08 L 1/18, C 10 M 1/28 // (C08F210/02, 238/00)

(54) **Ethylen-Alkin-Copolymerisate, deren Herstellung und Verwendung als Zusatz zu Erdöldestillaten.**

(30) Priorität : **12.12.80 DE 3046802**

(43) Veröffentlichungstag der Anmeldung : **23.06.82 Patentblatt 82/25**

(45) Bekanntmachung des Hinweises auf die Patenterteilung : **04.07.84 Patentblatt 84/27**

(84) Benannte Vertragsstaaten : **BE DE FR GB NL SE**

(56) Entgegenhaltungen : **DE-A- 2 044 655**

(73) Patentinhaber : **BASF Aktiengesellschaft**
**Carl-Bosch-Strasse 38**
**D-6700 Ludwigshafen (DE)**

(72) Erfinder : **Vogel, Hans-Henning, Dr.**
**Hans-Purrmann-Strasse 7C**
**D-6710 Frankenthal (DE)**
Erfinder : **Schramm, Manfred**
**Buergermeister-Lamberth-Strasse 31**
**D-6806 Viernheim (DE)**
Erfinder : **Werner, Michael, Dr.**
**Hatzburger Weg 21**
**D-6800 Mannheim (DE)**
Erfinder : **Schwartz, Erich, Dr.**
**Mohnstrasse 37**
**D-6700 Ludwigshafen (DE)**

**EP 0 054 138 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Ethylen-Alkin-Copolymerisate sowie Ethylen-Alkin-Alken-Terpolymerisate, deren Herstellung und deren Verwendung als Zusatz zu Erdöldestillaten.

Bei derartigen Copolymerisaten sind Stoffeigenschaften erforderlich, die einerseits eine ausgeprägte Wirksamkeit zur Verbesserung der Kälteeigenschaften von Erdöldestillaten zeigen, und die andererseits durch ein genügend einfaches Herstellverfahren machbar sein sollen.

Es ist bekannt, zur Erfüllung dieser Erfordernisse den Erdöldestillaten Copolymerisate des Ethylens mit Vinylcarbonsäureestern zuzusetzen, wobei die Copolymerisate Zahlenmittel des Molekulargewichts kleiner als 3 000 aufweisen (vgl. z. B. US-PS 3 567 639, US-PS 3 389 979 oder US-PS 3 159 608).

Die für die Verwendung in Erdöldestillaten bekannten Ethylen-Vinylcarbonsäureester-Co- bzw. -Terpolymerisate weisen aber noch den Nachteil auf, daß sie nicht universell in allen Erdöldestillaten gleich gut wirksam sind. Vielmehr hängt die Wirkung der bekannten Zusatzstoffe unter anderem entscheidend von der Provenienz des dem Erdöldestillat zugrunde liegenden Rohöls, der angewendeten Verarbeitungstechnik für das Rohöl und von der Art und Menge an n-Paraffinkohlenwasserstoffen im Erdöldestillat, d. h. z. B. auch von der Siedelage bzw. dem Siedepunkt des Erdöldestillats ab.

Der Erfindung liegt die Aufgabe zugrunde Ethylen-Alkin-Copolymerisate und Ethylen-Alkin-Alken-Terpolymerisate zu schaffen.

Eine weitere Aufgabe der vorliegenden Erfindung ist es, Ethylen-Alkin-Copolymerisate und Ethylen-Alkin-Alken-Terpolymerisate nach einem einfachen Verfahren herzustellen.

Eine dritte Aufgabe besteht darin, neue Polymerisate aufzufinden, die eine hohe Wirksamkeit zur Verbesserung der Kälteeigenschaften von Erdöldestillaten aufweisen, ohne daß die eingangs geschilderten Nachteile auftreten.

Diese Aufgaben wurden erfindungsgemäß gelöst durch Ethylen-Alkin-Copolymerisate mit einem durchschnittlichen Zahlenmittel des Molekulargewichts, bestimmt mit einem Dampfphasenosmometer, zwischen 500 und 500 000, bevorzugt zwischen 500 und 10 000, insbesondere zwischen 1 000 und 5 000, die einpolymerisiert enthalten :

(A) mindestens 70 und maximal 99 Gewichtsprozent Ethylen, bezogen auf das Copolymerisat und
(B) eine acetylenisch ungesättigte Verbindung der allgemeinen Formel (I)

$$H—C≡C—R^1 \qquad (I)$$

wobei $R^1 = (OCH_2CH_2)_nH$ oder $CH_2—R^2$ und $n = 1$ bis 20 und $R^2 = —OH$, $—OCOR^3$ oder $—COOR^3$ bedeuten und $R^3$ eine geradkettige oder verzweigte $C_1$- bis $C_{10}$-Alkylgruppe ist.

Bevorzugt sind ternäre Ethylen-Alkin-Alken-Copolymerisate bestehend aus 50 bis 99 Gewichtsprozent der einpolymerisierten Einheiten (A) und 0,5 bis 30 Gewichtsprozent einpolymerisierter Einheiten (B) sowie zusätzlich 0,5 bis 49,5 Gewichtsprozent (C) eines olefinisch ungesättigten Esters der allgemeinen Formel (II)

$$CH_2=\overset{\displaystyle R^4}{\underset{\displaystyle R^5}{C}} \qquad (II)$$

wobei $R^4$ = H oder $CH_3$ und $R^5 = —OOC—R^6$ oder $—COOR^6$ und $R^6$ eine geradkettige oder verzweigte $C_1$- bis $C_{10}$-Alkylgruppe oder Wasserstoff ist und wobei die Summe der Gewichtsprozente aus (A), (B) und (C) 100 ist.

Die Aufgaben wurden ferner gelöst durch ein Verfahren zur Herstellung der eingangs geschilderten Ethylen-Alkin-Copolymerisate, wobei die Copolymerisation von Ethylen mit einer acetylenisch ungesättigten Verbindung der allgemeinen Formel I sowie gegebenenfalls mit einem olefinisch ungesättigten Ester der allgemeinen Formel II in einem kontinuierlich oder diskontinuierlich betriebenen Polymerisationssystems bei Temperaturen von 150 bis 350 °C und bei Drücken von 500 bis 3 000 bar in Gegenwart eines radikalisch zerfallenden organischen Peroxids, gegebenenfalls Sauerstoff und gegebenenfalls eines Polymerisationsreglers durchgeführt wird, wobei man in Gegenwart von 200 bis 4 000 Molppm Peroxid, bezogen auf die Monomeren, polymerisiert.

Die erfindungsgemäßen Ethylen-Alkin-Copolymerisate bzw. Ethylen-Alkin-Alken-Terpolymerisate sind, je nach Molekulargewicht, feste bis wachsartige Substanzen, welche noch Doppelbindungen enthalten. Die Copolymerisate weisen ein durchschnittliches Zahlenmittel des Molekulargewichts, bestimmt mit einem Dampfphasenosmometer, von 500 bis 500 000, bevorzugt 500 bis 10 000 auf. Für die Verwendung in Erdöldestillaten insbesondere geeignet sind Copolymerisate mit durchschnittlichen Molekulargewichten zwischen 1 000 und 5 000.

Die erfindungsgemäßen Copolymerisate enthalten mindestens 70 und maximal 99 Gewichtsprozent Ethylen, bezogen auf das Copolymerisat und außerdem eine acetylenisch ungesättigte Verbindung der

allgemeinen Formel I: $H—C{\equiv}C—R^1$, wobei $R^1 = H(OCH_2CH_2)_n$ oder $CH_2—R^2$ und n = 1 bis 20 und $R^2$ = —OH, —$OCOR^3$ oder —$COOR^3$ bedeuten und $R^3$ eine geradkettige oder verzweigte $C_1$- bis $C_{10}$-Alkylgruppe ist. Beispiele für die ungesättigte Verbindung der Formel I sind Propin-1-ol-essigsäureester und Propin-1-ol.

Besonders gut geeignet als Comonomer (I) ist der Propin-1-ol-essigsäureester.

Der Gehalt an der acetylenisch ungesättigten Verbindung (I) im Copolymerisat liegt zwischen 0,5 und 30 Gewichtsprozent, bezogen auf das Copolymerisat.

Bevorzugt sind Terpolymerisate, die neben 65 bis 98 Gewichtsprozent Ethylen und 1 bis 20 Gewichtsprozent der acetylenisch ungesättigten Verbindung (I) noch zusätzlich 1 bis 34 Gewichtsprozent einer dritten Komponenten, nämlich eines olefinisch ungesättigten Esters der allgemeinen Formel (II):

$$CH_2{=}\underset{R^5}{\overset{R^4}{C}} \qquad (II)$$

einpolymerisiert enthalten, wobei $R^4$ = H oder $CH_3$ und $R^5 = OOC—R^6$ oder $COOR^6$ und $R^6$ eine geradkettige oder verzweigte $C_1$- bis $C_{10}$-Alkylgruppe oder Wasserstoff ist und die Summe der Gewichtsprozente aus (A), (B) und (C) 100 ist. Beispiele für die olefinisch ungesättigte Verbindung der Formel (II) sind Vinylester wie Vinylacetat oder Acrylsäureester wie Acrylsäureethylhexylester oder Acrylsäure-n-butylester. Besonders geeignet ist als drittes Comonomeres das Vinylacetat. Besonders bevorzugt sind Terpolymerisate, bei denen der Gehalt an Ethylen zwischen 75 und 80, an Verbindung (I) zwischen 3 und 15 und an Verbindung (II) zwischen 5 und 22 Gewichtsprozent liegt.

Die genannten Co- und Terpolymerisate können gegebenenfalls noch Restmengen von 0,01 bis 10, insbesondere 0,05 bis 5 Gewichtsprozent, bezogen auf das Polymerisat, der bei der Polymerisation nicht umgesetzten oder nach Beendigung der Polymerisation nachträglich zugesetzten Monomeren (I) und/oder (II) enthalten.

Die Ethylen-Alkin-Co- bzw. -Terpolymerisate werden hergestellt durch Copolymerisation von Ethylen mit einer acetylenisch ungesättigten Verbindung der allgemeinen Formel (I) sowie gegebenenfalls mit einem ungesättigten Ester der allgemeinen Formel (II) in einem kontinuierlich oder diskontinuierlich beschriebenen Polymerisationssystem bei Temperaturen zwischen 150 und 350 °C und bei Drücken von 500 bis 3 000 bar in Gegenwart eines radikalisch zerfallenden organischen Peroxids, gegebenenfalls Sauerstoff und gegebenenfalls eines Polymerisationsreglers.

Derartige Polymerisationsverfahren sind allgemein bekannt und beispielsweise in der Veröffentlichung von Ullmanns Enzyklopädie der Technischen Chemie, 3. Auflage, 14. Band, Seite 137 bis 148 beschrieben. Die Bedingungen in der Polymerisationszone lassen sich apparativ zweckmäßig in sog. Rohrreaktoren und/oder Autoklavreaktoren einstellen. Unter Rohrreaktoren versteht man rohrförmige Polymerisationsgefäße, deren Längenausdehnung das 10 000- bis 40 000 fache des kreisförmigen Rohrdurchmessers beträgt. In Autoklavreaktoren, deren Innenraum meist ein Verhältnis von Höhe zu Durchmesser des kreisförmigen Querschnitts von 1 : 1 bis 20 : 1 hat, wird das Reaktionsgut mit Hilfe von Rührern bewegt. Angaben über Copolymerisationsverfahren des Ethylens mit copolymerisierbaren Verbindungen zu binären oder ternären Copolymerisaten in Gegenwart von radikalisch zerfallenden organischen Peroxiden oder Sauerstoff finden sich beispielsweise in den neueren US-Patentschriften 4 048 411, 4 093 795, 4 076 919, 4 217 431, 4 169 929, 4 087 601 und 4 074 040.

Nach dem erfindungsgemäßen Verfahren wird, im Gegensatz zu den bekannten Verfahren, in Gegenwart relativ großer Mengen Peroxid, nämlich 200 bis 4 000, bevorzugt 400 bis 3 000, besonders bevorzugt 800 bis 3 000 Molppm, bezogen auf die Monomeren, copolymerisiert. Als Peroxid ist die Verbindung tert.-Butylperisononanat besonders geeignet.

Die erfindungsgemäßen Ethylen-Copolymerisate werden in einer Menge von 0,001 bis 2 Gewichtsprozent als Zusatz zu Erdöldestillaten mit einem Siedebereich von 120 bis 400 °C zur Verbesserung der Fließeigenschaften bzw. zur Erniedrigung des Fließpunktes und des « Cold Filter Plugging Points » nach DIN 51428 verwendet. Sie finden ferner in einer Menge von 0,001 bis 2 Gewichtsprozent Verwendung als Zusatz zu Erdöldestillaten (Neutralölen) mit einem Siedebereich über 400 °C, die nach bekannten Verfahren z. B. durch Vakuumdestillation erhalten wurden und als Ausgangsprodukte zur Herstellung von Schmiermitteln dienen, zur Erniedrigung des Stockpunktes der Neutralöle. Gemische der erfindungsgemäßen Ethylen-Copolymerisate werden als Zusatz von Erdöldestillaten, die durch Vakuumdestillation als Ausgangsprodukte zur Herstellung von Schmierölen erhalten wurden, zur Verbesserung der Kälteeigenschaften (Stockpunkt und Fließpunkt und/oder Cold-Filter-Plugging-Point-Wert) verwendet. Die erfindungsgemäß hergestellten neuen Co- und Terpolymerisate können geringe Mengen höhermolekularer Polymerisationsprodukte enthalten, die man bei der Verwendung der Co- und Terpolymerisate als Zusätze zu Erdöldestillaten zweckmäßigerweise durch die in DE-OS 28 32 738 beschriebene Maßnahme in Lösung halten kann. Für die Verwendung der erfindungsgemäßen Co- und Terpolymerisate in Erdöldestillaten ist es zweckmäßig, daß sie noch geringe Mengen an Comonomeren enthalten, um das vorzeitige Ausfallen der höhermolekularen Polymerisationsprodukte zu verhindern. Dazu können die

Comonomeren einzeln oder gemeinsam in Mengen von 0,5 bis 5 Volumenprozent, bezogen auf das Ethylen-Co- bzw. -Terpolymerisat, nachträglich zugesetzt werden.

Die Erfindung wird durch nachfolgende Herstellungsbeispiele näher erläutert.

## Versuchsbeispiele

Sämtliche Versuche wurden in einem kontinuierlich betriebenen Rührautoklaven mit 1 l-Innenvolumen durchgeführt. Bei allen Versuchen betrug der Reaktionsdruck 1 500 bar und die mittels kontinuierlich zudosiertem Peroxid eingestellte Reaktionstemperatur 240 °C. Der Ethylendurchsatz bewegte sich zwischen 400 und 550 Mol/h. Als Initiator wurde in allen Fällen t-Butylperisononanat benutzt. Die angegebene Peroxidmengen beziehen sich auf die Monomerenkonzentration in Mol. Das Molekulargeiwcht des Polymerisats wurde nach dem üblichen Verfahren mittels üblicher Mengen Propionaldehyd als Reglersubstanz eingestellt und über die Schmelzviskosität bei 120 °C in $mm^2/sec$ bestimmt.

Der Comonomerengehalt wurde im Falle der Ester durch Verseifen und Titration der überschüssigen Lauge bestimmt. Im Falle des Alkohols wurde der Gehalt an Polymerisat aus dem Gesamtsauerstoff unter Berücksichtigung entsprechender Korrekturwerte aus Vergleichsversuchen errechnet.

Die Versuchsbeispiele sind in der folgenden Tabelle zusammengefaßt.

(Siehe Tabelle Seite 5 f.)

Versuchsbeispiele

| Nr. | Art | Versuchsziel | Ethylendurchsatz (Mol/h) | Comonomer Art | Comonomer Dosierung (Mol/h) | Peroxidverbrauch (ppm) | Produktanalyse Viskosität ($mm^2$/sec) | Produktanalyse Comonomergehalt (Gew.%) |
|---|---|---|---|---|---|---|---|---|
| 1 | Beispiel | Copolymerisation | 500 | Essigsäurepropinester (I) | 10 | 830 | 120 | 10.3 |
| 2 | Vergleich | Copolymerisation | 400 | Essigsäurevinylester (II) | 9 | 65 | 210 | 9.8 |
| 3 | Vergleich | Homopolymerisation | 400 | - | - | 25 | 250 | - |
| 4 | Beispiel | Terpolymerisation | 480 | (I) und<br>(II) | 28<br>7 | 2700 | 200 | 15<br>6 |
| 5 | Vergleich | Copolymerisation | 430 | (II) | 20 | 47 | 180 | 20 |
| 6 | Beispiel | Copolymerisation | 540 | Propinol-1 (I) | 9 | 1300 | 190 | 3.5 |
| 7 | Beispiel | Terpolymerisation | 540 | Propinol (I)<br>Vinylacetat(II) | 7.5<br>45 | 950 | 130 | 3.8<br>20.0 |

**Ansprüche**

1. Ethylen-Alkin-Copolymerisate mit einem durchschnittlichen Zahlenmittel des Molekulargewichts, bestimmt mit einem Dampfphasenosmometer, zwischen 500 und 500 000, bevorzugt zwischen 500 und 10 000, insbesondere zwischen 1 000 und 5 000, die einpolymerisiert enthalten

(A) mindestens 70 und maximal 99 Gewichtsprozent Ethylen, bezogen auf das Copolymerisat und

(B) eine acetylenisch ungesättigte Verbindung der allgemeinen Formel (I)

$$H{-}C{\equiv}C{-}R^1 \qquad (I)$$

wobei $R^1 = (OCH_2CH_2)_nH$ oder $CH_2{-}R^2$ und $n = 1$ bis 20 und $R^2 = {-}OH$, ${-}OCOR^3$ oder ${-}COOR^3$ bedeuten und $R^3$ eine geradkettige oder verzweigte $C_1$- bis $C_{10}$-Alkylgruppe ist.

2. Ternäre Ethylen-Alkin-Alken-Copolymerisate nach Anspruch 1, bestehend aus 50 bis 99 Gewichtsprozent einpolymerisierter Einheiten (A) und 0,5 bis 30 Gewichtsprozent einpolymerisierter Einheiten (B) sowie zusätzlich

(C) 0,5 bis 49,5 Gewichtsprozent eines olefinisch ungesättigten Esters der allgemeinen Formel (II)

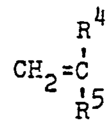

(II)

wobei $R^4 = H$ oder $CH_3$ und $R^5 = {-}OOC{-}R^6$ oder ${-}COOR^6$ und $R^6$ eine geradkettige oder verzweigte $C_1$- bis $C_{10}$-Alkylgruppe oder Wasserstoff ist und die Summe der Prozentzahlen aus (A), (B) und (C) 100 ist.

3. Verfahren zur Herstellung der Ethylen-Alkin-Copolymerisate nach Ansprüchen 1 und 2, dadurch gekennzeichnet, daß die Copolymerisation von Ethylen mit einer acetylenisch ungesättigten Verbindung der allgemeinen Formel I sowie gegebenenfalls mit einem olefinisch ungesättigten Ester der allgemeinen Formel II in einem kontinuierlich oder diskontinuierlich betriebenen Polymerisationssystem bei Temperaturen von 150 bis 350 °C und bei Drücken von 500 bis 3 000 bar in Gegenwart eines radikalisch zerfallenden organischen Peroxids, gegebenenfalls Sauerstoff und gegebenenfalls eines Polymerisationsreglers durchgeführt wird, wobei man in Gegenwart von 200 bis 4 000 Molppm Peroxid, bezogen auf die Monomeren, polymerisiert.

4. Verwendung der Ethylen-Alkin-Copolymerisate nach Ansprüchen 1 und 2 als Zusatz zu Erdöldestillaten in Mengen von 0,001 bis 2,0 Gewichtsprozent.

**Claims**

1. An ethylene-alkyne copolymer which has a number-average molecular weight, determined by vapor phase osmometry, of from 500 to 500,000, preferably from 500 to 10,000, especially from 1,000 to 5,000, and which contains as copolymerized units,

(A) from 70 to 99 percent by weight of ethylene and

(B) an acetylenically unsaturated compound of the general formula (I)

$$H{-}C{\equiv}C{-}R^1 \qquad (I)$$

where $R^1$ is $(OCH_2CH_2)_nH$ or $CH_2{-}R^2$, n is 1 bis 20, $R^2$ is ${-}OH$, ${-}OCOR^3$ or ${-}COOR^3$ and $R^3$ is straight-chain or branched $C_1$-$C_{10}$-alkyl.

2. A ternary ethylene-alkyne-alkene copolymer as claimed in claim 1, which contains, as copolymerized units, from 50 to 99 percent by weight of (A), from 0.5 to 30 percent by weight of (B) and, in addition,

(C) from 0.5 to 49.5 percent by weight of an olefinically unsaturated ester of the general formula (II)

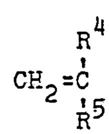

(II)

where $R^4$ is H or $CH_3$, $R^5$ is ${-}OOC{-}R^6$ or ${-}COOR^6$ and $R^6$ is straight-chain or branched $C_1$-$C_{10}$-alkyl or hydrogen, and the sum of the percentages by weight of (A), (B) and (C) is 100.

3. A process for the preparation of an ethylene-alkyne copolymer as claimed in claim 1 or 2, wherein the copolymerization of ethylene with an acetylenically unsaturated compound of the general formula I,

with or without an olefinically unsaturated ester of the general formula II, is carried out in a continuous or batchwise polymerization system at from 150 to 350 °C under a pressure of from 500 to 3,000 bar in the presence of from 200 to 4,000 mole ppm, based on the monomers, of an organic peroxide which decomposes into free radicals, in the presence or absence of oxygen and in the presence or absence of a polymerization regulator.

4. The use of an ethylene-alkyne copolymer as claimed in claim 1 or 2, in an amount of from 0.001 to 2.0 percent by weight as an additive for petroleum distillates.

## Revendications

1. Copolymères d'éthylène et d'alcynes avec un poids moléculaire moyen en nombre, déterminé par osmométrie en phase gazeuse, compris entre 500 et 500 000, de préférence entre 500 et 10 000 et en particulier entre 1 000 et 5 000, dans lesquels sont copolymérisés

(A) au moins 70 et au plus 99 % en poids, par rapport au copolymère, d'éthylène et

(B) un composé à insaturation acétylénique de la formule générale (I)

$$H—C{\equiv}C—R^1 \qquad (I)$$

dans laquelle $R^1$ désigne un groupe $(OCH_2CH_2)_nH_3$ ou $CH_2—R^2$, où n vaut de 1 à 20 et $R^2$ = —OH, $—OCOR^3$ ou $—COOR^3$, $R^3$ étant un radical alcoyle en $C_1$ à $C_{10}$ à chaîne droite ou ramifiée.

2. Copolymères ternaires d'éthylène, d'alcyne et d'alcène suivant la revendication 1, formés de 50 à 99 % en poids d'unités (A) copolymérisées et de 0,5 à 30 % en poids d'unités (B) copolymérisées et contenant en outre

(C) 0,5 à 49,5 % en poids d'un ester à insaturation oléfinique de la formule générale (II)

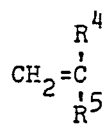

dans laquelle $R^4$ = H ou $CH_3$ et $R^5$ = $—OOC—R^6$ ou $—COOR^6$, $R^6$ désignant de l'hydrogène ou un radical alcoyle en $C_1$ à $C_{10}$ à chaîne droite ou ramifiée, la somme des pourcentages de (A), de (B) et de (C) étant égale à 100.

3. Procédé de préparation de copolymères d'éthylène et d'alcynes suivant les revendications 1 et 2, caractérisé en ce que l'on procède à la copolymérisation de l'éthylène avec un composé à insaturation acétylénique de la formule générale I et avec un ester à insaturation oléfinique de la formule générale II éventuel dans un système de polymérisation travaillant en continu ou en discontinu, à des températures de 150 à 350 °C et sous des pressions de 500 à 3 000 bars, en présence d'un peroxyde organique se décomposant avec formation de radicaux libres, éventuellement d'oxygène et éventuellement d'un régulateur de la polymérisation, le peroxyde étant présent en une proportion molaire de 200 à 4 000 ppm par rapport aux monomères.

4. Utilisation des copolymères d'éthylène et d'alcynes suivant les revendications 1 et 2 comme additifs à des distillats du pétrole en des proportions de 0,001 à 2,0 % en poids.